# EUROPÄISCHE PATENTANMELDUNG

(11) **EP 0 562 375 A1**
(43) Veröffentlichungstag der Anmeldung: **29.09.1993**
(21) Anmeldenummer: 93103906.9
(22) Anmeldetag: 11.03.1993
(51) Int. Cl.: B65D 47/12, F16B 39/10, B65D 51/18

(54) **Entnahmeverschluss für Flüssigkeitsbehälter**

(30) Priorität: 25.03.1992 DE 4209682
(71) Anmelder: MERCK PATENT GmbH, D-64271 Darmstadt (DE)
(72) Erfinder: Schmelz, Michael, Dipl.-Ing., W-6239 Kriftel (DE)

(57) **Zusammenfassung**

Die Erfindung betrifft einen verbesserten Entnahmeverschluß für mit einem Behälterflansch an einer Behälteröffnung versehene Flüssigkeitsbehälter für hochreine Flüssigkeiten, mit
mindestens zwei Anschlußstutzen (1,2), welche mit Überwurfmuttern (3,4) befestigte Entnahmesysteme, vorzugsweise Schnellkupplungen, aufweisen,
wobei über eine der Überwurfmuttern (3) ein mit einer außenseitigen Zähnung (7) versehener, arretierbarer Sicherungsring (5) aufgeschoben ist, dessen Radius so bemessen ist, daß seine Zähnung in den Umfang der weiteren Überwurfmutter bzw. -muttern eingreift, sowie ein Verfahren zur Sicherung der Muttern solcher Entnahmeverschlüsse und für dieses Verfahren geeignete Sicherungsringe.

## Beschreibung

Die Erfindung betrifft einen verbesserten Entnahmeverschluß für mit einem Behälterflansch an einer Behälteröffnung versehene Flüssigkeitsbehälter für hochreine Flüssigkeiten, mit mindestens zwei Anschlußstutzen, welche mit Ürwurfmuttern befestigte Entnahmesysteme, vorzugsweise Schnellkupplungen, aufweisen wobei auf oder über eine der Überwurfmuttern ein mit einer außenseitigen Zähnung (7) versehener, arretierbarer Sicherungsring (5) aufgeschoben ist, dessen Radius so bemessen ist, daß seine Zähnung in den Umfang der weiteren Überwurfmutter bzw. -muttern eingreift.

Weiterhin betrifft die Erfindung ein Verfahren zur Sicherung zweier Muttern, die Schnellkupplungen auf Anschlußstutzen eines Entnahmeverschlusses, sowie für dieses Verfahren geeignete Sicherungsringe.

Bei der Herstellung von elektronischen Bauelementen und in anderen Einsatzbereichen werden in vielen Fällen flüssige Chemikalien benötigt, an deren Reinheit höchste Ansprüche gestellt werden. Beim Transport, der Lagerung und der Handhabung müssen jegliche Verunreinigungen dieser Chemikalien vermieden werden. Außerdem ist zu berücksichtigen, daß diese Chemikalien in vielen Fällen giftig oder in anderer Weise schädlich sind. Dadurch ergeben sich einerseits hohe Anforderungen an die verwendeten Transport- und Lagerbehälter, andererseits insbesondere aber an deren Entnahmeverschlüsse, die so gestaltet sein müssen, daß beim Transport und bei der Lagerung ein sicherer Verschluß des Behälters gewährleistet ist und daß bei der Befüllung oder Entnahme und auch bei den Vorbereitungen hierzu jegliche Fehlermöglichkeiten weitestgehend ausgeschlossen sind, die zu einer Verunreinigung und/oder einem unbeäbsichtigten Flüssigkeitsaustritt führen könnten. Aus diesen Gründen werden an die Materialauswahl und die Konstruktion der Entnahmeverschlüsse sehr strenge Anforderungen gestellt.

Bisher ist es üblich, die Entnahmeverschlüsse aus PTFE (Polytetrafluoräthylen) herzustellen, um jegliche Reaktion des Werkstoffs mit den flüssigen Chemikalien auszuschließen. Da eine Schweißverbindung von PTFE nicht möglich ist, sind die gebräuchlichen Entnahmeverschlüsse als Schraubkonstruktion ausgeführt, wobei auch das Tauchrohr in den Verschlußflansch eingeschraubt (z.B. DE-U1-86 28 919) ist.

Sowohl beim Anbringen und Lösen der Verbindung des Anschlußstutzens des Tauchrohrs mit den Rohrleitungen zum Befüllen und zur Flüssigkeitsentnahme als auch beim Verschließen mittels einer Schraubkappe besteht dabei jedoch die Gefahr, daß das aufgebrachte Schraubmoment zum Lösen der Schraubverbindung zwischen dem Tauchrohr und dem Verschlußflansch führt. In der EP-A1-341 533 wird daher vorgeschlagen, solch einen Entnahmeverschluß einstückig als Kunststoffspritzgußteil herzustellen.

Bei den bisher bekannten Entnahmeverschlüssen dieser Gattung werden die Entnahmesysteme mit Kunststoff-Überwurfmuttern befestigt. Da Verschraubungen aus Kunststoff geringe Reibungskoeffiziente aufweisen, kommt es bei längerer Benutzung leicht zu unbeabsichtigtem Lösen dieser Verschraubungen. Herkömmliche Metallsicherungen können zur Sicherung der Verschraubungen nicht eingesetzt werden, da sie leicht korrodieren und so zu Verunreinigung dieser hochreinen Flüssigkeiten führen.

Eine Möglichkeit zur Sicherung der Überwurfmuttern besteht darin, sie mit Madenschrauben aus Kunststoff zu versehen. Diese Lösung weist jedoch anwendungstechnische Nachteile auf:
Erstens sind solche Madenschrauben im praktischen Betrieb schlecht zu handhaben, zweitens weisen sie eine zu geringe mechanische Festigkeit auf und drittens ist es bei dieser Lösung erforderlich, jede einzelne Überwurfmutter einzeln zu sichern. Dies führt bei Wechseln der Entnahmesysteme zu erhöhtem Zeit- und Arbeitsaufwand.

In der US 957,931 wird eine Mutternsicherung beschrieben, wobei ein Sicherungselement auf eine der Muttern aufgebracht wird, dessen Radius so bemessen ist, daß seine Zähnung in die Zähnung eines weiteren Sicherungselementes eingreift, d.h. auf jeder der zu sichernden Muttern muß danach ein Sicherungselement gebracht und zum Öffnen entfernt werden.

Die Aufgabe der Erfindung ist es daher, einen verbesserten Entnahmeverschluß der eingangs genannten Gattung so auszubilden, daS die Überwurfmuttern gegen unbeabsichtigtes Lösen gesichert sind, und die Handhabung der dazu eingesetzten Sicherung einfach und schnell durchzuführen ist.

Diese Aufgabe wird erfindungsgemäß dadurch gelöst, daß auf oder über eine der Überwurfmuttern ein mit einer außenseitigen Zähnung versehener, arretierbarer Sicherungsring aufgeschoben ist, dessen Radius so bemessen ist, daß seine Zähnung in den Umfang der weiteren Überwurfmutter bzw. -muttern eingreift, vorzugsweise wobei der Sicherungsring (5) über einen innenseitig angebrachtes geeignetes Konstruktionselement, vorzugsweise einen Stift (6), in einer Bohrung oder einer Nut (8) der Überwurfmutter (3) arretiert.

In einer bevorzugten Ausführungsform sind die Anschlußstutzen konzentrisch um den mit dem Sicherungsring versehenen Ahschlußstutzen angeordnet.

Vorzugsweise bestehen der Sicherungsring und die Überwurfmuttern aus Materialien unterschiedlicher Härte.

Vorzugsweise bestehen die Überwurfmuttern aus einem Kunststoff, vorzugsweise aus einem fluorierten Kunststoff, insbesondere Thermoplast, insbesondere aus einem modifizierten PTFE (TFM).

Vorzugsweise besteht der Sicherungsring aus einem Kunststoff oder Metall. Ein weiterer Gegenstand der Erfindung ist ein Verfahren zur Sicherung zweier oder mehrerer Überwurfmuttern, welche Schnellkupplungen auf Anschlußstutzen eines Entnahmeverschlusses für hochreine Flüssigkeiten befestigen, wobei man nach Anziehen aller Überwurfmuttern über eine dieser Überwurfmuttern einen mit einer außenseitigen Zähnung versehenen, arretierbaren Sicherungsring so aufschiebt, daß die außenseitige Zähnung in den Umfang der benachbarten Überwurfmutter(n) so eingreift, daß eine formschlüssige Verbindung entsteht.

Ein weiterer Gegenstand der Erfindung ist ein Sicherungsring zur Sicherung zweier oder mehrerer benachbarter Überwurfmuttern, wobei der Sicherungsring
(a) einen Innendurchmesser aufweist, der dem Durchmesser einer Überwurfmutter entspricht,
(b) innenseitig ein geeignetes Konstruktionselement, vorzugsweise einen Stift aufweist, der in die Bohrung oder Nut der Überwurfmutter eingreift, und
(c) außenseitig eine Zähnung aufweist, die in den Umfang der benachbarten Überwurfmutter eingreift,
   insbesondere wobei der Sicherungsring aus einem härteren Material, insbesondere einem härteren Kunststoff, als die Überwurfmuttern besteht.

Dadurch kann zwischen diesen Überwurfmuttern einerseits und Entnahmesystemen andererseits keine unbeabsichtigte Undichtheit mehr auftreten.

Nachfolgend wird ein Ausführungsbeispiel der Erfindung näher erläutert, das in der Zeichnung dargestellt ist. Es zeigt:
Fig. 1 in einem senkrechten Schnitt einen Entnahmeverschluß für einen Flüssigkeitsbehälter für hochreine flüssige Chemikalien und
Fig. 2 eine Draufsicht auf den Entnahmeverschluß nach Fig. 1 mit abgenommenen Verschlußteilen.

Der in der Zeichnung dargestellte Entnahmeverschluß weist einen Verschlußflansch 10 auf, der an der Oberseite eines nur mit strichpunktierten Linien angedeuteten Behälterflanschs 11 anliegt. Der Behälterflansch 11 umgibt eine Behälteröffnung eines Flüssigkeitsbehälters, der in der Zeichnung nur teilweise dargestellt ist und der zur Aufnahme von hochreinen flüssigen Chemikalien bestimmt ist, wie sie beispielsweise in der elektronischen Halbleiterfertigung Verwendung finden. Zwischen dem Verschlußflansch 10 und dem Behälterflansch 11 ist ein Dichtring 15 eingelegt.

Ein einstückig mit dem Verschlußflansch 10 verbundenes Tauchrohr 12 ragt nach unten in den Flüssigkeitsbehälter und dient zur Entnahme der Flüssigkeit. Nach oben schließt sich an das Tauchrohr 12 ein Anschlußstutzen 1 an, auf dem mittels einer Überwurfmutter 3 ein Einsatzstutzen bzw. ein Ventilnippel gehalten wird. Der Einsatzstutzen 1 trägt einen Gewindeanschluß, der mittels einer Schraübkappe beim Transport und bei der Lagerung verschlossen ist oder ist selbstabsparend, so daß ein Schnellkupplungsabschluß aufgestellt werden kann.

Neben dem Anschlußstutzen 1 ist mindestens ein weiterer Anschlußstutzen 2 an der Oberseite des Verschlußflansches 10 angeordnet, der ebenfalls einstückig mit diesem ausgeführt ist. Der Anschlußstutzen 2, dessen Gewindeanschluß mittels einer Überwurfmutter 4 verschließbar oder mit einer Rohrleitung verbindbar ist, dient beispielsweise zur Gaszufuhr bei der Flüssigkeitsentnahme.

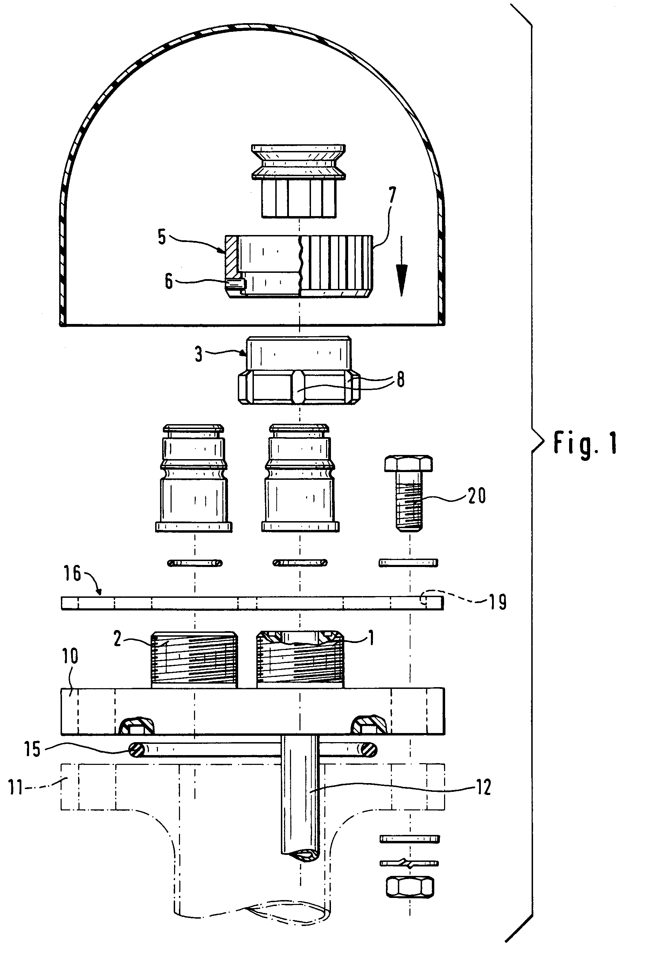

Auf dem Verschlußflansch 10 liegt eine Brillenplatte 8 auf, die Durchbrechungen aufweist, durch die die Anschlußstutzen 1 und 2 ragen. Am Rand der Brillenplatte 16 sind in Bohrungen 19 Flanschschraüben 20 angeordnet, die in Fig. 1 nur angedeutet sind und die zur Verbindung mit dem Behälterflansch 11 dienen. Mittels der Flanschschrauben 20 wird die Brillenplatte 8 und somit auch der Verschlußflansch 0 gegen den Behälterflansch 1 gepreßt.

Der aus dem härteren Material bestehende Sicherungsring 5 wird auf die Überwurfmutter 3 aufgeschoben und vorzugsweise durch einen innenseitig angebrachten Stift 6 in eine Nut 8 der Überwurfmutter orientiert.

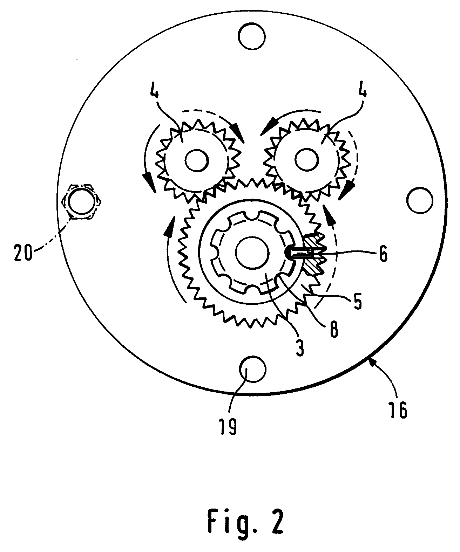

Mit der außenseitigen Zähnung 7, welche in Fig. 2 zur Verdeutlichung übertrieben dargestellt wurde, greift in den Umfang der weiteren Überwurfmutter 4 ein, so daß ein gleichsinniges Verdrehen der beiden Überwurfmuttern verhindert ist. Beim Versuch z.B. die Überwurfmutter 3 zu lösen, wird gleichzeitig die Überwurfmutter festgedreht.

Ein unbeabsichtigtes Lösen von Teilen des Entnahmeverschlusses ist ausgeschlossen, so daß die Betriebssicherheit erhöht wird.

## Patentansprüche

1. Verbesserter Entnahmeverschluß für mit einem Behälterflansch an einer Behälteröffnung versehene Flüssigkeitsbehälter für hochreine Flüssigkeiten, mit
mindestens zwei Anschlußstutzen (1,2), welche mit Überwurfmuttern (3,4) befestigte Entnahmesysteme, vorzugsweise Schnellkupplungen, aufweisen, dadurch gekennzeichnet, daß auf oder über eine der Überwurfmuttern (3) ein mit einer außenseitigen Zähnung (7) versehener, arretierbarer Sicherungsring (5) aufgeschoben ist, dessen Radius so bemessen ist, daß seine Zähnung in den Umfang der weiteren Überwurfmutter bzw. -muttern eingreift.

2. Entnahmeverschluß nach Anspruch 2, dadurch gekennzeichnet, daß der Sicherungsring (5) über einen innenseitig angebrachtes geeignetes Konstruktionselement, vorzugsweise einen Stift (6), in einer Bohrung oder Nut (8) der Überwurfmutter (3) arretiert.

3. Entnahmeverschluß nach Anspruch 2 mit drei oder mehr Anschlußstutzen (1,2,9), dadurch gekennzeichnet, daß die Anschlußstutzen konzentriert um den mit dem Sicherungsring versehenen Anschlußstutzen angeordnet sind.

4. Entnahmeverschluß nach einem der Ansprüche 1 bis 3, dadurch gekennzeichnet, daß der Sicherungsring und die Überwurfmuttern aus Materialien unterschiedlicher Härte bestehen.

5. Entnahmeverschluß nach einem der Ansprüche 1 bis 4, dadurch gekennzeichnet, daß die Überwurfmuttern aus einem Kunststoff, vorzugsweise aus einem fluorierten Kunststoff, insbesondere Thermoplast bestehen.

6. Entnahmeverschluß nach Anspruch 5, dadurch gekennzeichnet, daß die Überwurfmuttern aus einem modifiziertem PTFE (TFM) bestehen.

7. Entnahmeverschluß nach einem der Ansprüche 1 bis 6, dadurch gekennzeichnet, daß der Sicherungsring aus einem Kunststoff oder Metall besteht.

8. Verfahren zur Sicherung zweier oder mehrerer Überwurfmuttern, welche Schnellkupplungen auf Anschlußstutzen eines Entnahmeverschlusses für hochreine Flüssigkeiten befestigen, dadurch gekennzeichnet, daß man nach Anziehen aller Überwurfmuttern über eine dieser außenseitigen Zähnung versehenen, arrtierbaren Sicherungsring so aufschiebt, daß die außenseitige Zähnung in den Umfang der benachbarten Überwurfmutter(n) so eingreift, daß eine formschlüssige Verbindung entsteht.

9. Sicherungsring zur Sicherung zweier oder mehrerer benachbarter Überwurfmuttern, dadurch gekennzeichnet, daß der Sicherungsring
(a) einen Innendurchmesser aufweist, der dem Durchmesser einer Überwurfmutter entspricht,
(b) innenseitig ein geeignetes Konstruktionselement, vorzugsweise einen Stift aufweist, der in die Bohrung oder Nut der Überwurfmutter eingreift, und
(c) außenseitig eine Zähnung aufweist, die in den Umfang der benachbarten Überwurfmutter eingreift.

10. Sicherungsring nach Anspruch 9, dadurch gekennzeichnet, daß er aus einem härteren Material, insbesondere einem härteren Kunststoff, als die Überwurfmuttern besteht.
